# EUROPÄISCHE PATENTSCHRIFT

(11) **EP 2 105 732 B1**
(45) Veröffentlichungstag und Bekanntmachung des Hinweises auf die Patenterteilung: **20.08.2014**
(21) Anmeldenummer: 09004230.0
(22) Anmeldetag: 25.03.2009
(51) Int. Cl.: G01N 27/414, G01N 27/12

(54) **Verfahren zum Messen der Konzentration eines Gases**
Method for measuring the concentration of a gas
Procédé de mesure de la concentration d'un gaz

(30) Priorität: 26.03.2008 EP 08005559
(43) Veröffentlichungstag der Anmeldung: 30.09.2009
(73) Patentinhaber: Micronas GmbH, 79108 Freiburg (DE)
(72) Erfinder: Frerichs, Heinz-Peter, Dr., 79271 St. Peter (DE); Zimmer, Hans-Günter, 79276 Reute (DE); Kolleth, Tobias, 79108 Freiburg (DE); Wilbertz, Christoph, Dr., 79194 Gundelfingen (DE)
(74) Vertreter: Koch, Bertram

(56) Entgegenhaltungen:
- EP-A- 1 879 023
- DE-A1- 4 333 875
- DE-C1- 4 139 721
- GALONSKA T ET AL: "Cross Sensitivity and Stability of FET - Based Hydrogen Sensors" SENSORS, 2007 IEEE, IEEE, PI, 28. Oktober 2007 (2007-10-28), Seiten 1036-1039, XP031221242 ISBN: 978-1-4244-1261-7
- BURGMAIR M ET AL: "Humidity and temperature compensation in work function gas sensor FETs" SENSORS AND ACTUATORS B, ELSEVIER SEQUOIA S.A., LAUSANNE, CH, Bd. 93, Nr. 1-3, 1. August 2003 (2003-08-01), Seiten 271-275, XP004437110 ISSN: 0925-4005

## Beschreibung

Die Erfindung betrifft ein Verfahren zum Messen der Konzentration eines Zielgases, wobei ein Gassensor bereit gestellt wird, dessen Sensorsignal von einer Zielgaskonzentration abhängig ist.

Ein derartiges Verfahren ist aus DE 43 33 875 C2, EP 1 879 023 A1 und aus T. Galonska et al., "Cross Sensitivity and Stability of FET - Based Hydrogen Sensors", SENSORS, 2007 IEEE, 28. Oktober 2007, Selten 1036-1039, bekannt. Dabei wird ein Gassensor bereitgestellt, der ein Silizium-Substrat aufweist, in das ein Feldeffekttransistor integriert ist. Der Feldeffekttransistor weist eine Gate-Elektrode auf, die leitend mit einer Sensorelektrode verbunden ist, über der eine gassensitive Schicht angeordnet ist, die durch einen Luftspalt von der Sensorelektrode beabstandet und über den Luftspalt kapazitiv an die Sensorelektrode gekoppelt ist. Auf die der Sensorelektrode abgewandte Rückseite der gassensitiven Schicht ist eine Deckelektrode aufgebracht. Ein der Sensoretektrode zugewandter Oberflächenbereich der gassensitiven Schicht wird mit einem Zielgas in Kontakt gebracht, das beim Kontaktieren das Oberflächenbereichs an diesen adsorbiert. Bei einer Änderung der Konzentration des Zielgases verändert sich die Austrittsarbeit in dem Oberflächenbereich der gassensitiven Schicht. Da die Sensorelektrode kapazitiv an den Oberflächenbereich gekoppelt ist, verändert sich dabei auch das elektrische Potential an der Gate-Elektrode. In Abhängigkeit von der Potentioländerung wird der Stromfluss zwischen einem Drain- und einem Source-Anschluss des Feldeffekttransistors gesteuert. Bei einem derartigen Gassensor ist das Messsignal etwa logarithmisch zur Zielgaskonzentration, d.h. die Messempfindlichkeit nimmt mit zunehmender Zielgaskonzentration ab. Da das Messsignal außerdem durch die Anwesenheit von Sauerstoff gestört werden kann, ist die Messung größerer Zlelgaskonzentratlon mit dem Verfahren problematisch.

Es besteht deshalb die Aufgabe, ein Verfahren zum Messen der Konzentration eines Zielgases bereitzustellen, das eine hohe Messgenauigkeit ermöglicht.

Diese Aufgabe wird mit den Merkmalen des Anspruchs 1 gelöst.

In vorteilhafter Weise wird also der Arbeitspunkt des Gassensors bei unterschiedlichen Zielgaskonzentrationen jeweils in den Aussteuerungsbereich mit der größeren Messempfindlichkeit gelegt, wodurch unterschiedliche Zielgaskonzentrationen mit derselben Messempfindlichkeit gemessen werden können. Die Regelung der Temperatur erfolgt dabei so, dass das Sensorsignal des Gassensors bei einer Veränderung der Zielgaskonzentration in etwa seinen Wert beibehält, sodass die Zielgaskonzentration dann aus der eingestellten Temperatur ermittelt werden kann. Die Aussteuerungsbereiche können zuvor experimentell gemessen und/oder mit Hilfe eines mathematischen Modells bestimmt werden.

Bei einer bevorzugten Ausgestaltung der Erfindung wird die Temperatur derart geregelt, dass der Gassensor an einem Arbeitspunkt betrieben wird, an dem der Gassensor seine größte Empfindlichkeit für das Zielgas aufweist. Die Zielgaskonzentration kann dann noch genauer gemessen werden.

Zweckmüßigerweise wird das Sensorsignal durch Messen der Austritfisarbeit einer gassensitiven Schicht erfasst. Die gassensitive Schicht ist dabei mit einer für das Zielgas inerten, elektrisch isolierenden Beschichtung überdeckt, die haftend mit der gassensitiven Schicht verbunden und derart ausgestaltet ist, dass sie für das Zielgas, dessen Konzentration gemessen werden soll, und ein sich davon unterscheidendes, an dem Oberflächenbereich adsorbierbares weiteres Gas durchlässig ist. Die Beschichtung kann für das Zielgas und das weitere Gas unterschiedliche Diffusionskonstanten aufweisen, wobei die Diffüsionskonstanten, das Zielgas und das weiter Gas derart aufeinander gewählt werden, dass die Sensitivität des Gassensors für das Zielgas zunimmt, wenn die Konzentration des Zielgases bei Anwesenheit des weiteren Gases einen vorbestimmten Konzentrations-Schwellenwert überschreitet

Das Sensorsignal wird bevorzugt kapazitiv durch einen Luftspalt hindurch an der gassensitiven Schicht gemessen.

Bei einer vorteilhaften Ausgestaltung der Erfindung wird die Temperatur des Gassensors auf eine Solltemperatur geregelt, die höher ist als die Umgebungstemperatur des Gassensors, wobei der Gassensor zum Einstellen der Solltemperatur beheizt wird. Der Gassensor kann dann auch bei niedrigen Umgebungstemperaturen im zweiten Aussteuerungsbereich betrieben werden.

Bei einer anderen vorteilhaften Ausführungsform der Erfindung wird die Temperatur des Gassensors auf eine Solltemperatur geregelt, die niedriger ist als die Umgebungstemperatur des Gassensors, wobei der Gassensor zum Einstellen der Solltemperatur gekühlt wird. Durch die Kühlung ist es möglich, den Gassensor auch bei erhöhten Umgebungstemperaturen, wie sie beispielsweise im Motorraum eines eine Verbrennungsmaschine aufweisenden Kraftfahrzeugs auftreten können, bei einer Solltemperatur zu betreiben, die bei der Messung der Konzentration des Zielgases eine hohe Messgenauigkeit und/oder eine hohe Messauflösung ermöglicht.

Nachfolgend sind Ausführungsbeisplele der Erfindung anhand der Zeichnung näher erläutert. Es zeigt:
- Fig. 1: einen Querschnitt durch einen Gassensor, der einen SGFET aufweist, dessen Kanalbereich über einen Luftspalt kapazitiv an eine mit einer Passlvierungs-Beschichtung versehene gassensitive Schicht gekoppelt ist,
- Fig. 2: einen Querschnitt durch einen Gassensor, der einen CCFET aufweist, dessen Sensorelektrode über einen Luftspalt kapazitiv an eine mit einer Passlvlerungs-Beschichtung versehene gassensitive Schicht gekoppelt ist,
- Fig. 3: einen Querschnitt durch einen als Kelvinsonde ausgestalteten Gassen- sor, bei dem die gassensitive Schicht eine Passlvierungs-Beschichtung aufweist,
- Fig. 4: eine graphische Darstellung eines Sensorssignals (obere Kurve) und der Zielgaskonzentration (untere Kurve) eines Ausführungsbeispiels des Gas- sensors, wobei auf der Abszisse die Zeit t und auf der Ordinate links die Amplitude S des Sensorssignals eines Potentialsensors und rechts die Zielgaskonzentration k aufgetragen sind,
- Fig. 5: eine Darstellung ähnlich Fig. 4, wobei jedoch die Temperatur des Gassensors geringer ist als in Fig. 4,
- Fig.6: eine Darstellung ähnlich Fig. 5, wobei jedoch die Temperatur des Gassensors geringer ist als in Fig. 5,
- Fig. 7: eine graphische Darstellung eines Schwellenwerts für die Zielgaskon- zentration des Gassensors, wobei auf der Abszisse die Temperatur und auf der Ordinate der Schwellenwert aufgetragen sind, und
- Fig. 8: eine schematische Darstellung einer Regeleinrichtung.

Bei einem Verfahren zum Messen der Konzentration eines Zielgases wird ein Gassensor 1 bereitgestellt, der als SGFET, als CCFET oder als Kelvinsonde ausgestaltetet ist.

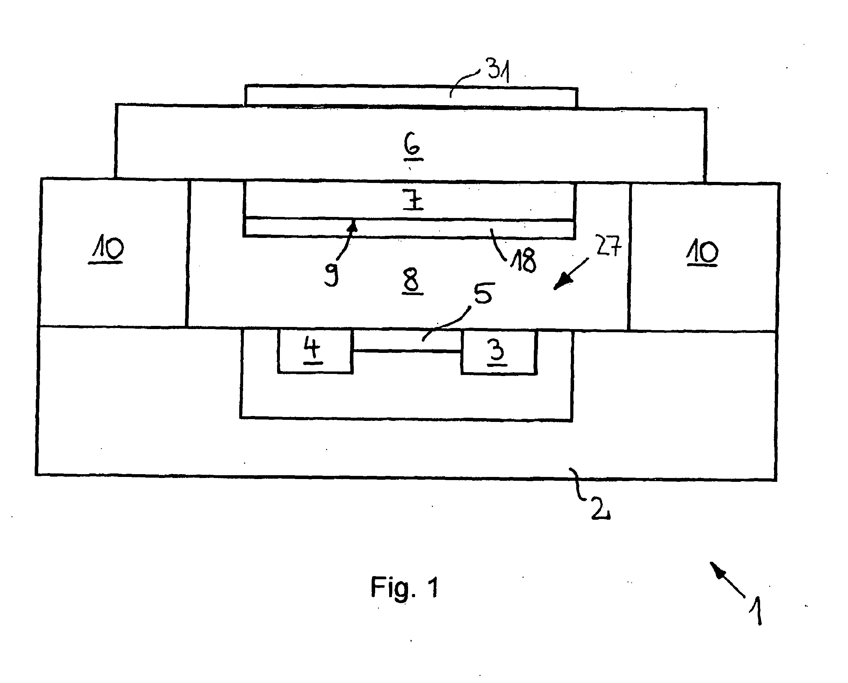

Wie in Fig. 1 erkennbar ist, weist der als SGFET ausgestaltete Gassensor ein Substrat 2 auf, In das ein Potentialsensor 27 integriert ist. Der Potentialsensor 27 hat eine Drain 3 und eine Source 4, die in einer n-dotierten Transistorwanne angeordnet sind. Die Drain 3 und die Source 4 können beispielsweise aus p-dotiertem Silizium bestehen. Die Drain 3 ist über elektrische Leiterbahnen mit einem in der Zeichnung nicht näher dargestellten Drain-Anschluss verbunden. In entsprechender Weise ist die Source 4 mit einem Source-Anschluss verbunden. Zwischen Drain 3 und Source 4 ist in dem Substrat 2 ein Kanalbereich 5 gebildet, auf dem eine elektrisch isolierende Dünnoxidschicht angeordnet Ist, die als Gatedielektrikum dient.

Über dem Kanalbereich 5 ist an einem Trägerteil 6 eine gassensitive Schicht 7 angeordnet, die vorzugsweise aus einem Edelmetall, insbesondere aus Platin oder Palladium besteht und durch einen Luftspalt 8 von dem Kanalbereich 5 beabstandet ist. Ein dem Kanalbereich 5 zugewandter Oberflächenbereich 9 der gassensitiven Schicht 7 ist über den Luftspalt 8 kapazitiv an den Kanalbereich 5 gekoppelt.

Das Trägerteil 6 ist beidseits der gassensitiven Schicht 7 über eine elektrische Isolationsschicht 10 mit dem Substrat 2 verbunden. In Fig. 1 ist deutlich erkennbar, dass das Trägerteil 6 und die gassensitive Schicht 7 ein Suspended Gate bilden.

Der Luftspalt 4 wird über mindestens eine In der Zeichnung nicht näher dargestellte Öffnung mit der den Gassensor 1 umgebenden Atmosphäre verbunden. Über diese Öffnung wird der Oberflächenbereich 9 der gassensitiven Schicht 7 mit einem zu detektierenden Zielgas, nämlich Wasserstoff, und mit einem weiteren Gas, nämlich einem elektronegativen Gas, wie z.B. in der Atmosphäre enthaltendem Sauerstoff, In Kontakt gebracht. Bei einem Kontakt mit dem Oberflächenbereich 9 adsorbleren das Zielgas und das weitere Gas an dem Oberflächenbereich 9. Bei der Adsorption des Zielgases verändert sich in dem Oberflächenbereich 9 die Austrittsarbeit, was zu einer Veränderung des elektrischen Potentials in dem Kanalbereich 5 führt.

Bei dem Ausführungsbelsplel nach Fig. 1 ist der Kanalbereich 5 offen ausgebildet (ISET) und über das Dünnschichtoxid und den Luftspalt 8 direkt an die gassensitive Schicht 7 kapazitiv gekoppelt. Deutlich ist erkennbar, dass der Kanalbereich 5 an der der gassensitiven Schicht 7 gegenüberliegenden Seite des Luftspalts 8 angeordnet ist.

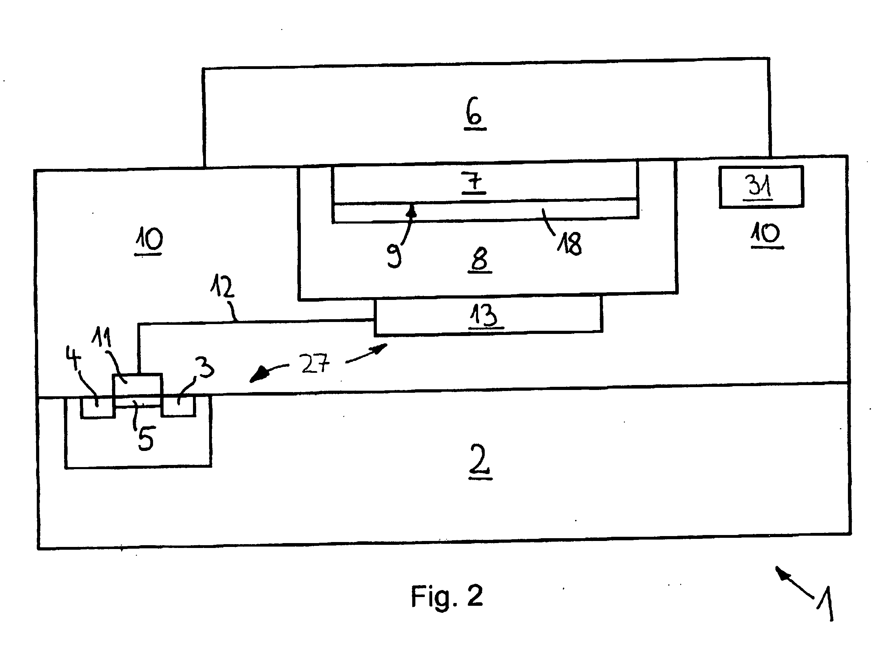

Bei dem Ausführungsbeispiel nach Fig. 2 ist der Feldeffekttransistor als CCFET ausgestattet, bei dem der Kanalbereich 5 seitlich neben der gassensitiven Schicht 7 in dem Substrat 2 angeordnet und mit einer Gateelektrode 11 abgedeckt ist. Zur kapazitive Ankopplung des Kanalbereichs 5 an die gassensitive Schicht 7 ist die Gateelektrode 11 über eine elektrische Verbindungsleitung 12 mit einer Sensorelektrode 13 verbunden, die an der dem Oberflächenbereich 9 der gassensitiven Schicht 7 gegenüberliegenden Seite des Luftspalts 8 auf einer auf dem Substrat 2 befindlichen Isolationsschicht 10 angeordnet ist. Die Isotationsschicht 10 kann beispielsweise eine SiO₂-Schicht sein. Der Aufbau des Suspended Gates des SGFET entspricht dem in Fig. 1.

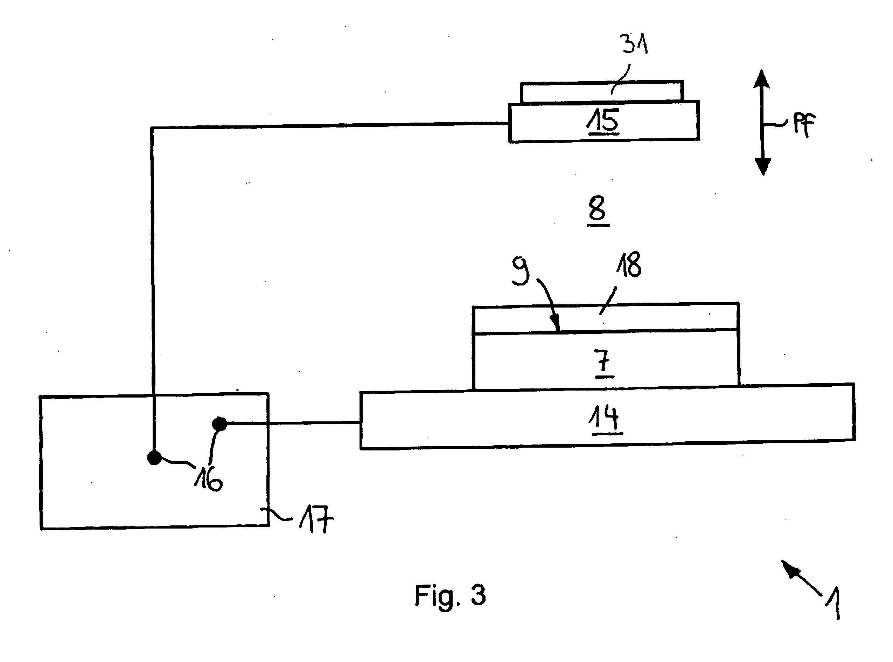

Bei dem in Fig. 3 gezeigten Ausführungsbeispiel ist der Gassensor 1 als KelvinSonde ausgestaltet. Die gassensitive Schicht 7 ist auf einem elektrisch leitenden Träger 14 angeordnet und weist an ihrer dem Träger 14 abgewandten Seite einen Oberflächenbereich 9 auf, an den das Zielgas adsorblerten kann. Der Oberflächenbereich 9 ist durch einen Luftspalt 8 von einer Elektrode 15 beabstandet und bildet mit dieser eine elektrische Kapazität.

Die Elektrode 15 kann mit Hilfe eines in der Zeichnung nicht näher dargestellten Aktors in Schwingungen versetzt werden. Dabei bewegt sich die Elektrode 1 5 entsprechend dem Pfeil Pf abwechselnd auf die gassensitive Schicht 7 zu- und von dieser weg. Die Elektrode 15 und der Träger 14 bzw. die gassensitive Schicht 7 sind mit Anschlüssen 16 einer Auswerte- und Ansteuereinrichtung 17 verbunden. Diese hat einen in Fig. 3 nicht näher dargestellten Potentialsensor, der zur Messung der elektrischen Spannung zwischen der gassensitiven Schicht 7 und der Elektrode 15 mit den Anschlüssen 16 verbunden ist. Die Auswerte- und Ansteuereinrichtung 17 weist außerdem eine mit dem Potentialsensor in Steuerverbindung stehende, verstellbare Spannungsquelle auf, mittels der eine Gegenspannung zwischen den Potentialsensor und die Elektrode 15 und/oder den Träger 15 anlegt wird. Die Gegenspannung wird so gewählt, dass das von dem Potentialsensor gemessene Potential im Mittel gleich null ist.

Bei den vorstehend beschriebenen Gassensoren 1 ist jeweils der Oberflächenbereich 9 der gassensitiven Schichten 7 durchgängig von einer für das Zielgas inerten, elektrisch isolierenden polymeren Beschichtung 18 überdeckt, die vorzugsweise aus Polymethylmethacrylat (PMMA) oder Polyimid besteht. Die Beschichtung 18 haftet fest an der gassensitiven Schicht 7 an. Die Beschichtung 18 ist als Dickschicht mit einer etwa konstanten Dicke ausgestaltet, die vorzugsweise zwischen 0,5 µm und 2,5 µm beträgt.

Die Beschichtung 18 ist sowohl für das Zielgas als auch für das weitere Gas durchlässig. Die Diffusionskonstanten, das Zielgas und das weitere Gas sind derart aufeinander abgestimmt, dass die Sensitivität des Gassensors 1 für das Zielgas stark zunimmt, wenn die Konzentration des Zielgases bei Anwesenheit des weiteren Gases einen Schwellenwert 19 überschreitet. Die Lage des Schwellenwerts 19 ist von der Temperatur abhängig.

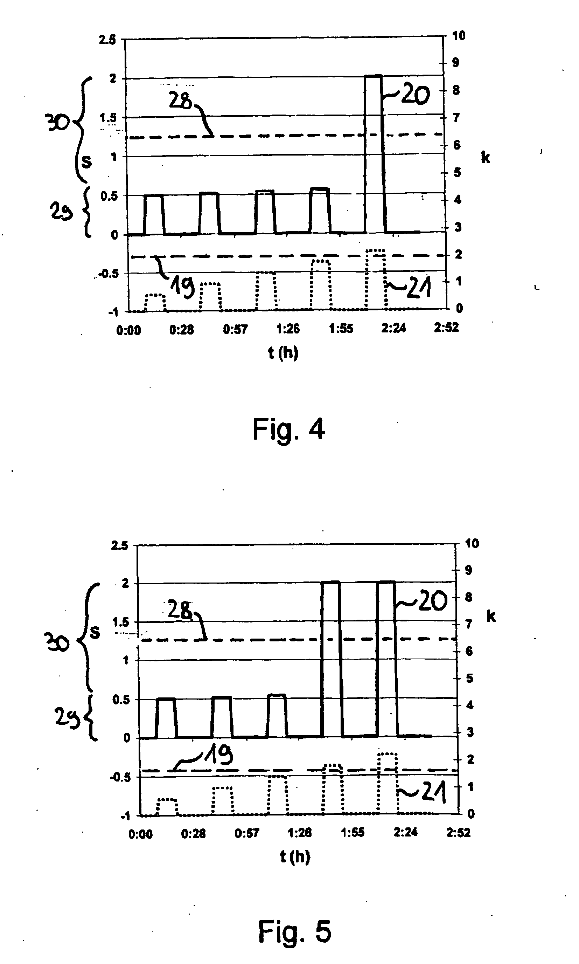

In Fig. 4 bis 6 ist erkennbar, dass das Sensorsignal 20 des Potentialsensors 27 jeweils bei konstanter Temperatur bei Zielgaskonzentrationen 21, die in einem ersten Konzentrationsbereich liegen, der nach oben durch den Konzentrations-Schwellenwert 19 begrenzt ist, zunächst etwa logarithmisch mit der Zielgaskonzentration 21 anstelgt. In dem ersten Konzentrationsbereich liegt das Sensorsignal 20 des Potentialsensors 27 in einem ersten Aussteuerungsbereich 29.

In einem zweiten Konzentrationsbereich, der an seinem unteren Ende an den Konzentrations-Schwellenwert angrenzt und wesentlich schmaler ist als der erste Konzentrationsbereich, steigt das Sensorsignal 20 bei konstanter Temperatur stark an. In dem zweiten Konzentrationsbereich liegt das Sensorsignal 20 in einem zweiten Aussteuerungsbereich 30, in dem die Messempfindlichkelt des Gassensors 1 größer ist als in dem ersten Aussteuerungsbereich 29. In einem dritten Konzentrationsbereich, der oberhalb des zweiten Konzentrationsbereichs liegt und an diesen angrenzt, ist das Sensorsignal 20 des Potentialsensors 27 bei konstanter Temperatur im Wesentlichen konstant auf einem Wert, der an den zweiten Konzentrationsbereich angrenzt.

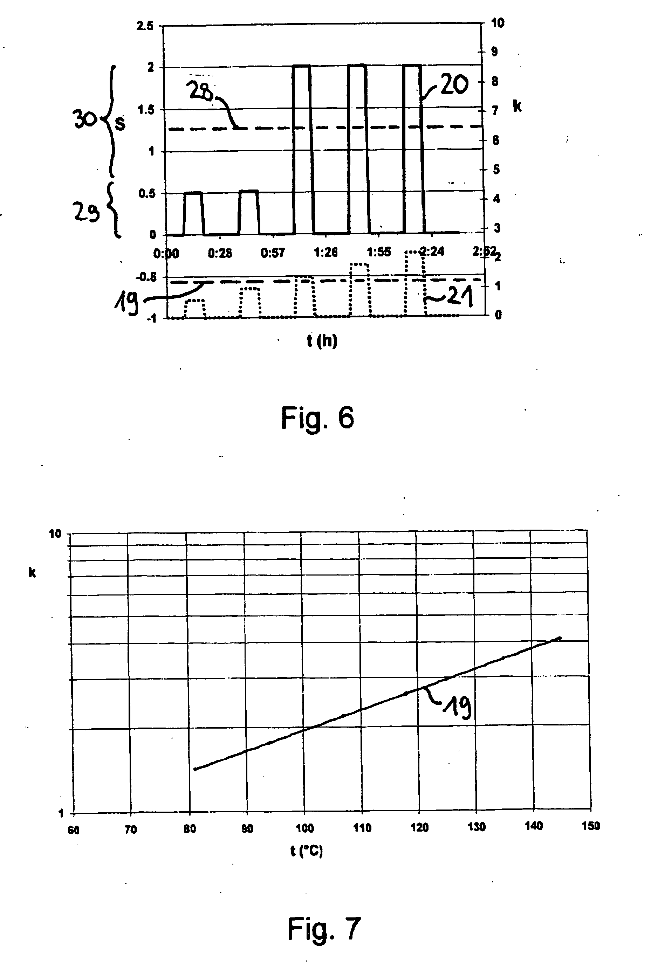

In Fig. 7 ist erkennbar, dass der Konzentrations-Schwellenwert 19 von der Temperatur der aus der gassensitiven Schicht 7 und der Beschichtung 18 gebildeten Schichtenfolge abhängig ist und mit zunehmender Temperatur kontinuierlich ansteigt. Dabei erfolgt der Anstieg etwa exponentiell mit der Temperatur. Gegebenenfalls kann der exponentielle Anstieg in dem für die Konzentrationsmessung relevanten Bereich linear angenähert werden.

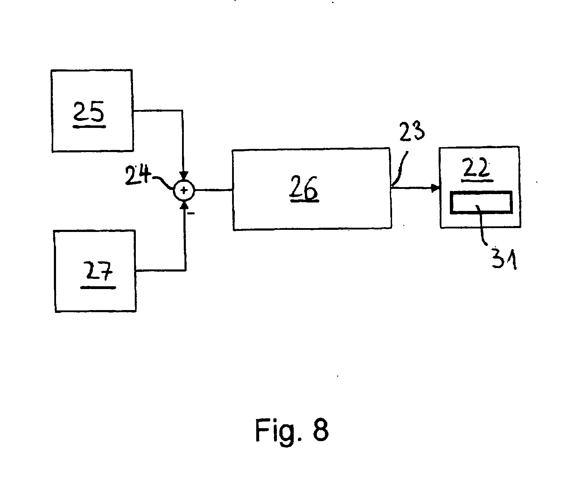

Die in Fig.1-3 abgebildeten Gassensoren weisen Jeweils eine in Fig. 8 nur schematisch dargestellte Temperiereinrichtung 22 auf, mittels der die Temperatur der gassensitiven Schicht 7 und der Beschichtung 18 einstellbar ist. Ein Steuereingang der Temperiereinrichtung 22 ist mit einem Steilsignolausgang 23 einer Regeleinrichtung verbunden, die dazu dient, die Temperatur des der gassensitiven Schicht 7 und der Beschichtung 18 jeweils so einzustellen, dass das Sensorsignal 20 des Potentialsensors 27 im Wesentlichen von der Zielgaskonzentration 21 unabhängig Ist und in dem zweiten Aussteuerungsbereich 30 liegt.

Die Temperiereinrichtung 22 kann ein Heiz- und/oder Kühlelement 31 aufweisen, das beispielsweise an dem Trägerteil 6 angeordnet oder in dieses integriert sein kann. Bei dem in Fig. 1 gezeigten Ausführungsbeispiel ist das Heiz- und/oder Kühlelement 31 auf die der gassensitiven Schicht 7 abgewandte Rückseite des Trägerteils 6 aufgebracht. Das Helz- und/oder Kühlelement 31 kann ein Peltier-Element und/oder eine elektrische Widerstandshelzung umfassen.

In Fig. 2 ist erkennbar, dass das Heiz- und/oder Kühlelement 31 auch an der Isolationsschlcht 10 angeordnet oder in diese integriert sein kann. Bei dem in Fig. 3 gezeigten Ausführungsbeispiel ist das Helz- und/oder Kühlelement 31 an der Elektrode 15 angeordnet.

Die Regeleinrichtung hat eine Vergleichseinrichtung 24, die einen mit dem Potentialsensor 27 verbunden Istwerteingang und einen mit einem Sollwertgeber 25 verbundenen Sollwerteingang aufweist. Ein Ausgang der Vergleichseinrichtung 24 ist über einen Regler 26 mit dem Stellsignalausgang 23 verbunden. Mit Hilfe des Sollwertgebers 25 wird ein Sollwert 28 an den Sollwerteingang angelegt, der im zweiten Aussteuerungsbereich 30 liegt, also einem Wert entspricht, den das Sensorsignal 20 des Potentialsensors 27 bei einer Zlelgaskonzentration 21 oberhalb des Konzentrations-Schwellenwerts 19 aufweist.

In einer ersten Betriebsart des Gassensors 1 steuert der Regler 26 die Temperiereinrichtung 22 jeweils derart an, dass beim Auftreten einer Abweichung zwischen dem Sensorsignal 20 des Potentialsensors 27 und dem Sollwert 28 die Temperatur der gassensitiven Schicht 7 und der Beschichtung 18 im Sinne einer Reduzierung der Abweichung verändert wird. Wenn das Sensorsignal 20 des Potentialsensors 27 mit dem Sollwert 28 übereinstimmt, ist die Temperatur der gassensitiven Schicht 7 und der Beschichtung 18 ein Maß für die Zielgaskonzentration 21.

In einer zweiten Betriebsart wird mit Hilfe der Temperiereinrichtung 22 die Temperatur der gassensitiven Schicht 7 und der Beschichtung 18 auf einen konstanten Wert eingestellt. Alternativ kann die Temperiereinrichtung 22 in der zweiten Betriebsart auch abgeschaltet sein, so dass die Temperatur des Gassensors 1 dann etwa der Umgebungstemperatur entspricht. Die zweite Betriebsart ist immer dann aktiviert, wenn die von dem Regler 26 ermittelte Temperatur einen vorgegebenen Temperatur-Mindestwert unterschreitet. Dieser kann beispielsweise etwa 60 - 80 °C betragen.

In der zweiten Betriebsart wird die Zielgaskonzentration 21 in Abhängigkeit vom Signalwert des Sensorsignals 20 des Potentialsensors 27 und In Abängigkeit von Kenngrößen ermittelt, die zum Beispiel in Form einer Kennlinie vorliegen können. In dem zweiten Betriebszustand entspricht die Signalauswertung im Wesentlichen der eines herkömmlichen Gassensors. Sobald der Temperatur-Mindestwert überschritten wird, wird auf die erste Betriebsart umgeschaltet, um die Zielgaskonzentration 21 In Abhängigkeit von der eingestellten Temperatur zu bestimmen. Die erste Betriebsart kommt also bei hohen Zielgaskonzentrationen 21 und die zweite Betriebsart bei geringeren Zielgaskonzentrationen 21 zur Anwendung.

Die erste Betriebsart wird vorzugsweise gewählt, wenn die Konzentration des Zielgases zwischen 1 % und 4% beträgt. Der entsprechende Konzentrationsbereich kann experimentell ermittelt werden. In diesem Bereich ergibt sich ein annähernd exponentieller Zusammenhang zwischen der Temperatur und der Zielgaskonzentration 21. Der erfindungsgemäße Gassensor 1 ermöglicht dadurch In diesem Konzentrationsbereich im Vergleich zu einem herkömmlichen Gassensor eine deutlich verbesserte Auflösung.

## Patentansprüche

1. Verfahren zum Messen der Konzentration eines Zielgases, wobei als Gassensor (1) ein SGFET, ein CCFET oder eine Kelvinsonde bereitgestellt wird, wobei der Gassensor (1) eine gassensitive Schicht (7) aufweist, die mit einer für das Zielgas inerten Beschichtung (18) überdeckt ist, die für das Zielgas und ein weiteres, an einem Oberflächenbereich der gassensitiven Schicht (7) adsorbierbares Gas durchlässig ist, wobei das Sensorsignal (20) des Gassensors (1) bei konstanter Temperatur durch Verändern der Zielgaskonzentration aussteuerbar ist und die Diffusionskonstante der Beschichtung (18) derart auf das Zielgas und das weitere Gas abgestimmt ist, dass das Sensorsignal (20) in einem ersten Aussteuerungsbereich (29) eine geringere Messempfindlichkeit aufweist als in einem zweiten Aussteuerungsbereich (30), wobei die den Aussteuerungsbereichen (29, 30) zugeordneten Gaskonzentrationen von der Temperatur abhängig sind, wobei die Temperatur des Gassensors (1) derart geregelt wird, dass das Sensorsignal (20) von der Zielgaskonzentration (21) unabhängig ist und in dem zweiten Aussteuerungsbereich (30) liegt, und wobei die Temperatur des Gassensors (1) ein MaB für die Zielgaskonzentration (21) ist.

2. Verfahren nach Anspruch 1, wobei die Temperatur derart geregelt wird, dass der Gassensor (1) an einem Arbeitspunkt betrieben wird, an dem der Gassensor (1) seine größte Empfindlichkeit für das Zielgas aufweist.

3. Verfahren nach Anspruch 1 oder 2, wobei das Sensorsignal (20) durch Messen der Austrittsarbeit einer gassensitiven Schicht (7) erfasst wird.

4. Verfahren nach einem der Ansprüche 1 bis 3, wobei das Sensorsignal (20) kapazitiv durch einen Luftspalt (8) hindurch an der gassensitiven Schicht (7) gemessen wird.

5. Verfahren nach einem der Ansprüche 1 bis 4, wobei die Temperatur des Gassensors (1) auf eine Solltemperatur geregelt wird, die höher ist als die Umgebungstemperatur des Gassensors (1), und wobei der Gassensor zum Einstellen der Solltemperatur beheizt wird.

6. Verfahren nach einem der Ansprüche 1 bis 5, wobei die Temperatur des Gassensors (1) aufeine Solltemperatur geregelt wird, die niedriger ist als die Umgebungstemperatur des Gassensors (1), und wobei der Gassensor zum Einstellen der Solltemperatur gekühlt wird.

## Claims

1. Method of measuring the concentration of a target gas, wherein an SGFET, a CCFET or a Kelvin probe is provided as gas sensor (1), wherein the gas sensor (1) comprises a gas-sensitive layer (7), which is covered by a coating (18), which is inert with
respect to the target gas and which is permeable by the target gas and a further gas adsorbable at a surface region of the gas-sensitive layer (7), wherein the sensor signal (20) of the gas sensor (1) is level-controllable at constant temperature by changing the target gas concentration and the diffusion constant of the coating (18) is so matched to the target gas and the further gas that the sensor signal (20) has in a first level-control range (29) a lower measuring sensitivity than in a second level-control range (30), wherein the gas concentrations associated with the level-control ranges (29, 30) are dependent on temperature, wherein the temperature of the gas sensor (1) is so regulated that the sensor signal (20) is independent of the target gas concentration (21) and lies in the second level-control range (30) and wherein the temperature of the gas sensor (1) is a measure of the target gas concentration (21).

2. Method according to claim 1, wherein the temperature is so regulated that the gas sensor (1) is operated at a working point at which the gas sensor (1) has its greatest sensitivity to the target gas.

3. Method according to claim 1 or 2, wherein the sensor signal (20) is detected by measuring the output work of a gas-sensitive layer (7).

4. Method according to any one of claims 1 to 3, wherein the sensor signal (20) is capacitively measured via an air gap (8) at the gas sensitive layer (7).

5. Method according to any one of claims 1 to 4, wherein the temperature of the gas sensor (1) is regulated to a target temperature which is higher than the ambient temperature of the gas sensor (1) and wherein the gas sensor is heated for setting the target temperature.

6. Method according to any one of claims 1 to 5, wherein the temperature of the gas sensor (1) is regulated to a target temperature which is lower than the ambient temperature of the gas sensor (1) and wherein the gas sensor is cooled for setting the target temperature.

## Revendications

1. Procédé pour mesurer la concentration d'un gaz cible, dans lequel on emploie comme détecteur de gaz (1) un SGFET, un CCFET ou une sonde de Kelvin, dans lequel le détecteur de gaz (1) présente une couche sensible au gaz (7), qui est recouverte d'un revêtement (18) inerte à l'égard du gaz cible, qui est perméable pour le gaz cible et pour un autre gaz adsorbable sur une zone de la surface de la couche sensible au gaz (7), dans lequel le signal de détecteur (20) du détecteur de gaz (1) peut être commandé à température constante par une variation de la concentration du gaz cible et la constante de diffusion du revêtement (18) est adaptée au gaz cible et à l'autre gaz d'une manière telle que le signal de détecteur (20) présente dans une première plage de commande (29) une sensibilité de mesure plus faible que dans une deuxième plage de commande (30), dans lequel les concentrations de gaz associées aux plages de commande (29, 30) dépendent de la température, dans lequel la température du détecteur de gaz (1) est régulée de telle manière que le signal de détecteur (20) soit indépendant de la concentration du gaz cible (21) et se situe dans la deuxième plage de commande (30), et dans lequel la température du détecteur de gaz (1) est une mesure de la concentration du gaz cible (21).

2. Procédé selon la revendication 1, dans lequel on régule la température de manière telle que le détecteur de gaz (1) fonctionne à un point de fonctionnement pour lequel le détecteur de gaz (1) présente sa plus grande sensibilité à l'égard du gaz cible.

3. Procédé selon la revendication 1 ou 2, dans lequel on détecte le signal de détecteur (20) par une mesure du travail de sortie d'une couche sensible au gaz (7).

4. Procédé selon l'une quelconque des revendications 1 à 3, dans lequel on mesure le signal de détecteur (20) par voie capacitive à travers une lame d'air (8) sur la couche sensible au gaz (7).

5. Procédé selon l'une quelconque des revendications 1 à 4, dans lequel on régule la température du détecteur de gaz (1) à une température de consigne, qui est plus élevée que la température ambiante du détecteur de gaz (1), et dans lequel on chauffe le détecteur de gaz pour régler la température de consigne.

6. Procédé selon l'une quelconque des revendications 1 à 5, dans lequel on régule la température du détecteur de gaz (1) à une température de consigne, qui est plus basse que la température ambiante du détecteur de gaz (1), et dans lequel on refroidit le détecteur de gaz pour régler la température de consigne.
